# EUROPEAN PATENT APPLICATION

(11) **EP 2 062 765 A1**
(43) Date of publication of application: **27.05.2009**
(21) Application number: 07425736.1
(22) Date of filing: 21.11.2007
(51) Int. Cl.: B60J 1/00, B62D 65/06, F16B 5/06

(54) **Panel securing clip**

(71) Applicant: Pilkington Italia S.p.A., 66050 San Salvo (CH) (IT); PILKINGTON Automotive Deutschland GmbH, 58455 Witten (DE)
(72) Inventor: The designation of the inventor has not yet been filed
(74) Representative: Germinario, Claudio

(57) **Abstract**

A panel securing clip (1) for securing a panel (11) within a frame (4) is disclosed. Preferably the panel is a vehicle glazing, and the frame surrounds an aperture in a vehicle into which the glazing will be secured. The panel securing clip comprises a base portion (2); a securing portion (7), joined to the base portion and adapted to be inserted into a hole (3) in a frame; and locking means (12) for holding the securing portion in fixed relation to the base portion. The securing portion is moveable between a first position, in which the panel securing clip may be inserted into a frame, and a second position, where the securing portion is held in fixed relation to the base portion, and the panel securing clip secures the panel to the frame. A method of inserting a panel into a frame is also disclosed.

## Description

The present invention relates to a panel securing clip for securing a panel within a frame, in particular, for securing a vehicle glazing within an aperture in a vehicle body.

Fixed vehicle glazings, such as a windscreen, a sidelight or a backlight, may be provided with an anti-theft or retaining clip or pin to prevent removal of the glazing once it has been fixed into an aperture in a vehicle body. For example, US 5,707,473 discloses a centring pin that may be used to both position and mount a glazing within an aperture in a vehicle. The pin comprises a head, bonded to a ceramic print on the glazing by an adhesive, and a shaft having a screw-thread. The shaft passes through a hole in the vehicle bodywork, and engages with a nut. The nut is threaded onto the shaft until it abuts the vehicle bodywork, firmly holding the glazing in place. Such a fixing resists a pull-out force (force used to remove the glazing from outside of the vehicle) by the mechanical interaction between the nut, the screw thread and the glazing itself.

Other, simpler clips comprise a simple hook-shape that is inserted into a hole in the vehicle body work such that the hook portion engages with the inside of the vehicle body, preventing pull-out removal of the glazing. However, as such clips provide a strong clamping force (strong resistance to a pull-out force preventing removal of the glazing), an equally strong force must be applied to push the clip through the hole in the vehicle body. This is problematic, as large glazings may have upwards of six clips to fix the glazing within the aperture in the vehicle. In addition, if it is not possible to access the inside of the vehicle body during assembly (for example, an interior trim has already been fitted) it can be almost impossible to apply the necessary force from outside of the vehicle to fix the glazing.

It is desirable to provide a panel securing clip that provides a strong clamping force but does not require a strong force to secure within the vehicle body. Even more advantageous would be to provide a panel securing clip that may be used even when the interior of the vehicle body is inaccessible.

The present invention aims to address these problems by providing a panel securing clip comprising a base portion; a securing portion, joined to the base portion and adapted to be inserted into a hole in a frame; and locking means for holding the securing portion in fixed relation to the base portion; characterised in that the securing portion is moveable between a first position, in which the panel securing clip may be inserted into a frame, and a second position, where the securing portion is held in fixed relation to the base portion, and the panel securing clip secures the panel to the frame.

The advantage of using a rotatable design is that a strong clamping force (strong resistance to a pull-out force preventing removal of the glazing) is achieved without the need for a strong force to insert the panel securing clip into the vehicle body. Consequently the assembly of such glazings in vehicle production lines is greatly simplified.

One embodiment of the invention offers the additional advantage that it is possible for a glazing to be inserted into an aperture in a vehicle merely by pushing the glazing into the aperture. It is not necessary to access the interior of the vehicle in order to secure the panel securing clip. This represents a considerable advancement in vehicle assembly.

Preferably, the securing portion of the panel securing clip is rotatably mounted on the base portion by means of a pivot.

Preferably, the locking means comprise at least one opposing protrusion on the securing portion adapted to engage with corresponding holes in the base portion.

More preferably, the securing portion is "L"-shaped, comprising one long arm positioned at 90° to one short arm, and wherein the short arm comprises a protrusion adapted to abut the frame. The long arm may comprise a protrusion adapted to abut the frame.

The base portion may also comprise a support portion, the support portion forming a base for a spacer portion.

A panel, and a glazing, intended to be secured within an aperture in a vehicle body having a panel securing clip in accordance with the invention are also provided.

The present invention also provides a method securing a panel within a frame, the panel being equipped with at least one panel securing clip in accordance with any of the present invention, the frame having two opposing surfaces and being provided with corresponding holes, comprising aligning the at least one panel securing clip with a corresponding hole in the frame; pushing the panel into the frame such that the securing portion of the at least one panel securing clip is inserted into the corresponding hole; continuing to push the panel into the frame until the base portion abuts a first surface of the frame; and moving the securing portion until the locking means engage and the securing portion contacts the opposing surface of the frame, and the panel is secured.

The present invention also provides a method of securing a panel within a frame, the panel being equipped with at least one panel securing clip in accordance with the invention, the frame having two opposing surfaces and being provided with corresponding holes, comprising: aligning the at least one panel securing clip with a corresponding hole in the frame; pushing the panel into the frame until the long arm of the securing portion contacts a first surface of the frame, continuing to push the panel into the frame such that the short arm of the securing portion of the at least one panel securing clip is inserted into the corresponding hole; and pushing the panel further into the frame until a lower surface of the long arm of the securing portion contacts the base portion, and the protrusion of the short arm abuts the opposing surface of the frame, and the locking means engage.

The present invention will now be described by way of example only, and with reference to the accompanying drawings, in which:
Figure 1 is a schematic partial cross-sectional view of a panel securing clip in accordance with a first embodiment of the present invention in an insert position;
Figure 2 is a schematic partial cross-sectional view of the panel securing clip shown in Figure 1 in a secured position;
Figure 3 is a schematic partial cross-sectional view of a panel securing clip in accordance with a second embodiment of the present invention in an insert position prior to insertion into a frame;
Figure 4 is a schematic partial cross-sectional view of the panel securing clip shown in Figure 3 part-way through the insertion process; and
Figure 5 is a schematic partial cross-sectional view of the panel securing clip of Figures 3 and 4 in a secured position.

The present invention utilises the principle of leverage to provide a panel securing clip having a strong clamping force but requiring only a fraction of that force for insertion into a hole within a frame, such as an aperture in a vehicle body. The panel securing clips of the present invention are able to rotate between a first position, in which the panel securing clip can be inserted in to hole in a frame, and a second position, in which the panel securing clip is secured to the frame. In the following examples, the panel described is a vehicle glazing, and the frame into which the panel fits an aperture in a vehicle body. However, the invention is not limited to such an application, as described below.

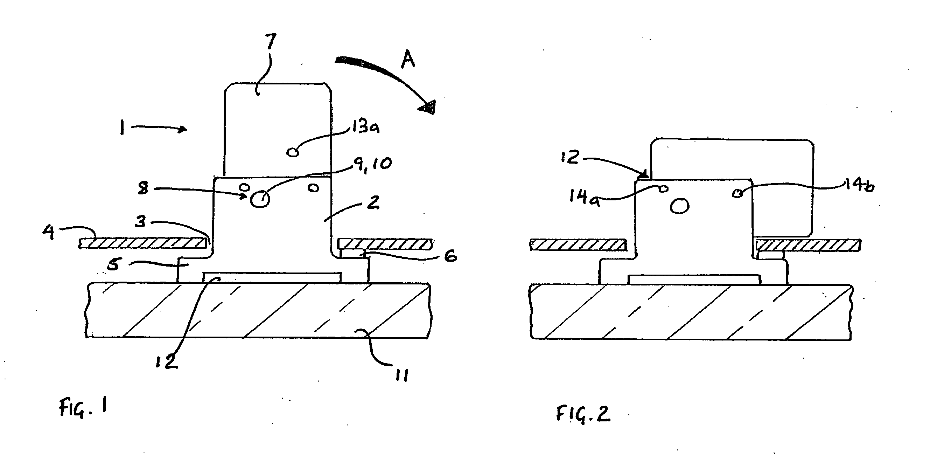

Figure 1 is a schematic partial cross-sectional view of a panel securing clip in accordance with a first embodiment of the present invention, in an insert position. (For clarity, the vehicle body and glazing are shown in cross-section.) The panel securing clip of the first embodiment is designed for use in situations where the interior of the frame into which the panel is to be fixed is accessible.

The panel securing clip 1 comprises a generally rectangular base portion 2 sized to fit within a hole 3 in a vehicle body 4, the base portion 2 provided with a larger support region 5 that overlaps the hole 3 and provides a base for a spacer portion 6 that abuts the exterior of the vehicle body 4 when the panel securing clip 1 is in a secured position. The panel securing clip 1 also comprises a generally rectangular securing portion 7. The securing portion 7 is mounted on the base portion 2 by means of a pivot 8, the pivot comprising a protrusion 9 on the securing portion 7 that engages with a hole 10 on the base portion 2. The base portion 2 is mounted on a glazing 11 by means of an adhesive bond 12. The panel securing clip 1 is shown in an insert position, with both the base portion 2 and the securing portion 7 protruding through a hole 3 within a vehicle body 4. The securing portion 3 is aligned with the base portion 7, so that no part of the securing portion 7 extends beyond the base portion 2 in the plane of the vehicle body 4. In the insert position, the securing portion 7 is free to rotate, and is substantially perpendicular to the base portion 2.

Figure 2 is a schematic partial cross-sectional view of the panel securing clip shown in Figure 1 in a secured position. (For clarity, the vehicle body and glazing are shown in cross-section, and certain reference numerals are omitted.) Once the securing portion 7 is placed into the secured position, the glazing 11 cannot be removed from the vehicle body 4 by a pull-out force, such that the glazing 11 is effectively clamped within the vehicle body 4. In this position, the securing portion 7 is substantially parallel with the base portion 2.

In order to place the panel securing clip 1 into a secured position, the securing portion 3 is rotated about the pivot 8 by 90° (as indicated by arrow A in Figure 1) until it contacts the interior surface of the vehicle body 4. At this point, locking means 12 engage, preventing the securing portion 7 from being rotated back to the original insert position. The locking means 12 comprise a pair of protrusions 13a, 13b (of which, only 13a is visible in Figure 1) on the securing portion 3 that are adapted to engage with a pair of holes 14a, 14b on the base portion 2, forming a male-female fit. To ensure that there is no further movement of the glazing 11 towards the vehicle body 4, the spacer portion 6 co-operates with the securing portion 7 and the locking means 12, such that the spacer portion 6 resists a push-in force and the securing portion 7 and locking means 12 resist a pull-out force. The glazing 11 will therefore be held securely in place, such that there is no movement of the glazing when the vehicle in which it is mounted is in use.

Both the base portion 2 and securing portion 7 are preferably formed of a mouldable plastics material, such as polypropylene with a glass fibre filler or polyamide. The spacer portion 6 may be formed of the same material and integral with the support region 5, or may be provided by a resilient material or an adhesive. As an alternative to an adhesive bond, the base portion 2 may be clamped into place, or may be bonded to the surface of the glazing 11 by means of an encapsulated gasket. Although the locking means 12 are shown has having a male portion on the securing portion 6 and a female portion on the base portion 2, this may of course be interchanged.

In order to secure the glazing 11 within an aperture within a vehicle body 4, the glazing 11 is positioned within the aperture such that the panel securing clip 1 is aligned with the hole 3 in the vehicle body 4. This may be achieved by using centring pins or other means. Once the panel securing clip 1 is aligned, the glazing 11 is pushed into the aperture such that the securing portion 7 is inserted into the hole 3 in the vehicle body 4 and until the spacer portion 6 abuts the exterior of the vehicle body 4. At this point, the securing portion 7 is rotated by 90° (as indicated by arrow A) until the locking means 12 engage, from within the interior of the vehicle. This may be done manually or in an automated fashion.

The advantage of using a rotatable design is that a strong clamping force (strong resistance to a pull-out force preventing removal of the glazing) is achieved without the need for a strong force to insert the panel securing clip into the vehicle body. Consequently the assembly of such glazings in vehicle production lines is greatly simplified.

A second embodiment of the invention, designed for use where the interior of the vehicle is inaccessible when the glazing is being fitted, will now be described.

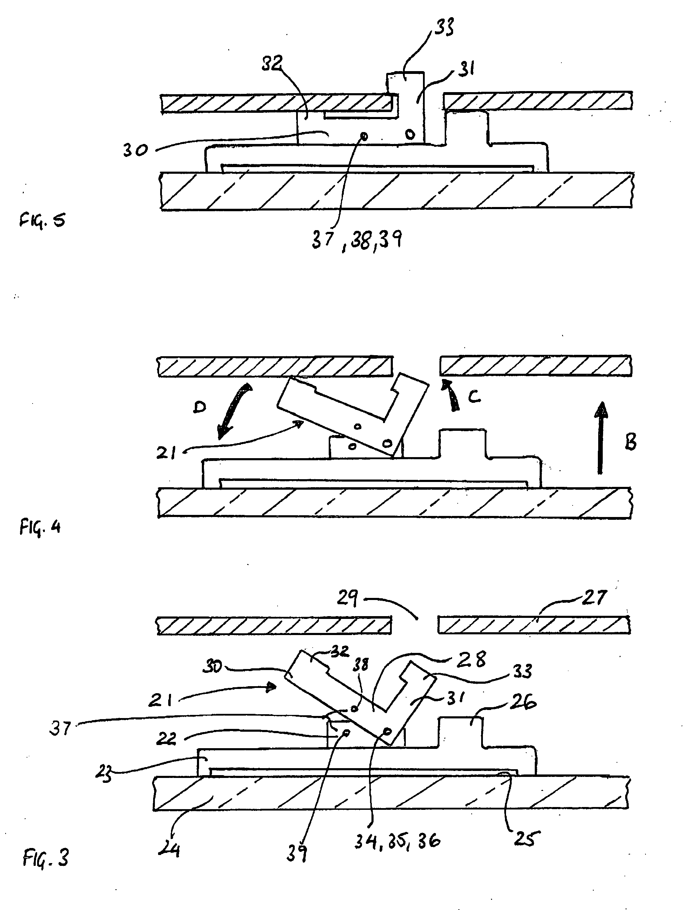

Figure 3 is a schematic partial cross-sectional view of a panel securing clip in accordance with a second embodiment of the present invention prior to insertion into a frame. (For clarity, the vehicle body and glazing are shown in cross-section and certain reference numerals are omitted.) The panel securing clip 21 comprises a generally rectangular base portion 22 mounted on a support portion 23. The support portion 23 is bonded to the surface of a glazing 24 by an adhesive bond 25. The support portion 23 also supports a spacer portion 26 that abuts the exterior of a vehicle body 27 when the panel securing clip 21 is in a secured position. The panel securing clip 21 further comprises a securing portion 28, sized to fit within a hole 29 within the vehicle body 27. The securing portion 28 is generally "L"-shaped, that is having one long arm 30 positioned at 90° to a short arm 31. Both the long arm 30 and the short arm 31 each comprise an abutment 32, 33, for engaging with respective sides of the vehicle body 27. The securing portion 28 is mounted on the base portion 22 by means of a pivot 34, comprising a protrusion 35 on the securing portion 28 that fits within a hole 36 in the base portion 22. The panel securing clip 21 also comprises locking means 37 for maintaining the securing portion 28 in the secured position. The locking means 37 comprises a protrusion 38 on the securing portion 28 that is adapted to engage with a hole 39 in the base portion 22, forming a male-female fit. Once the locking means 37 are engaged, the securing portion 28 cannot be removed from the secured position.

Figure 3 illustrates the panel securing clip 21 in an insert position: that is, the securing portion 28 is free to rotate. Figures 4 and 5 show two stages in the mounting of a glazing within an aperture in a vehicle using a panel securing clip in accordance with the second embodiment of the invention, illustrating how the panel securing clip 21 moves between an insert position and a secured position.

Figure 4 is a schematic partial cross-sectional view of the panel securing clip shown in Figure 3 part-way through the insertion process. (For clarity, the vehicle body and glazing are shown in cross-section and certain reference numerals are omitted.) Firstly, the glazing 24 is positioned within the aperture such that the panel securing clip 21 is aligned with the hole 29 in the vehicle body 27. This may be achieved by using centring pins or other means. Once the panel securing clip 21 is aligned, the glazing 24 is pushed into the aperture (the direction of movement being indicated by arrow B) until the abutment 32 on the long arm 30 contacts the exterior of the vehicle body 27.

At this point, the securing portion 28 begins to rotate about the pivot 34, as indicated by arrows C and D, as a result of the push in force experienced by the glazing 24. As the long arm 30 of the securing portion 28 rotates towards the support portion 23, the short arm 31 of the securing portion 28 rotates towards the hole 29 in the vehicle body 27. As the glazing 24 is pushed further into the aperture in the vehicle body, the short arm 31 of the securing portion 28 is inserted into the hole 29. The securing portion 28 continues to rotate, until the long arm 30 contacts the support portion 23, and the abutment 33 short arm 31 contacts the interior of the vehicle body 27. At this point, the locking means 37 engage. This situation is shown in Figure 5.

Figure 5 is a schematic partial cross-sectional view of the panel securing clip of Figures 3 and 4 in a secured position. (For clarity, the vehicle body and glazing are shown in cross-section and certain reference numerals are omitted.) In the secured position, the lower surface of the long arm 30 of the securing portion 28 is in contact with the support portion 23, with the abutment 23 in contact with the exterior of the vehicle body 27 within the aperture. The abutment 33 on the short arm 31 is in abutment with the interior of the vehicle body 27, which in co-operation with the locking means 37 that prevent the securing portion 28 from rotating further, ensures that glazing 24 cannot be removed from the aperture by a pull-out force. The spacer portion 26 is also in contact with the exterior of the vehicle body 27 within the aperture, ensuring that there is no relative movement between the glazing 24 and the vehicle body 27 when the vehicle is in use.

Both the base portion 22 and securing portion 28 are preferably formed of a mouldable plastics material, such as polypropylene with a glass fibre filler or polyamide. The spacer portion 26 may be formed of the same material and integral with the support region 23. As an alternative to an adhesive bond, the base portion 22 may be clamped into place, or may be bonded to the surface of the glazing 24 by means of an encapsulated gasket. Although the locking means 37 are shown has having a male portion on the securing portion 28 and a female portion on the base portion 22, this may of course be interchanged.

The advantage of using a rotatable design is that a strong clamping force (strong resistance to a pull-out force preventing removal of the glazing) is achieved without the need for a strong force to insert the panel securing clip into the vehicle body. Consequently the assembly of such glazings in vehicle production lines is greatly simplified. A further advantage of the panel securing clip of the second embodiment is that it is possible for a glazing to be inserted into an aperture in a vehicle merely by pushing the glazing into the aperture. It is not necessary to access the interior of the vehicle in order to secure the panel securing clip. This represents a considerable advancement in vehicle assembly.

For simplicity, the glazing illustrated in Figures 1 to 5 is a single-ply toughened glazing, such as may be used in a rooflight, sidelight or backlight of a vehicle. However, the panel securing clip may also be used in conjunction with a laminated glazing (comprising two plies of float glass having a layer of an interlayer material laminated therebetween), such as a windscreen, rooflight, sidelight or backlight of a glazing. The glazing may be flat, or be curved, that is, having a curvature in at least one direction. Although, as described above, centring pins may be used to aid in positioning a glazing before securing with the panel securing clip of the present invention, the panel securing clip itself may also function as a centring pin.

Although the invention is described in terms of vehicle glazings, the use of such panel securing clips is applicable to any situation where a panel, either flat or curved (having a curvature in at least one direction) or being of any shape, needs to be mounted securely within a frame. For example, glazings used in mass transportation vehicles, such as buses, coaches, trains and trams and glazings used in buildings may be mounted using such panel securing clips. Parts for vehicles, such as trims and covers, undertrays, body panels, instrument clusters, lamps, shields, guards and aesthetic finishers may also be mounted using such panel securing clips.

## Claims

1. Panel securing clip (1, 21) comprising a base portion (2, 22); a securing portion (7, 28), joined to the base portion (2, 22) and adapted to be inserted into a hole (3, 29) in a frame (4, 27); and locking means (12, 37) for holding the securing portion (7, 28) in fixed relation to the base portion (2, 22); **characterised in that** the securing portion (7, 28) is moveable between a first position, in which the panel securing clip (1, 21) may be inserted into a hole (3, 29) in a frame (4, 27), and a second position, where the securing portion (7, 28) is held in fixed relation to the base portion (2, 22), and the panel securing clip (1, 21) secures the panel (11, 24) to the frame (4, 27).

2. Panel securing clip (1, 21) according to claim 1, wherein the securing portion (7, 28) of the panel securing clip (1, 21) is rotatably mounted on the base portion (2, 22) by means of a pivot (8, 34).

3. Panel securing clip (1, 21) according to claim 1 or 2, wherein the locking means (12, 36) comprise at least one opposing protrusion (13a, 13b, 38) on the securing portion (7, 28) adapted to engage with corresponding holes (14a, 14b, 39) in the base portion (2, 22).

4. Panel securing clip (1,21) according to any of claims 1 to 3, wherein the base portion (2, 22) comprises a support portion (5, 23), the support portion (5, 23) forming a base for a spacer portion (6. 26).

5. Panel securing clip (21) according to any of claims 1 to 4, wherein the securing portion (28) is "L"-shaped, comprising one long arm (30) positioned at 90° to one short arm (31), and wherein the short arm (31) comprises a protrusion (33) adapted to abut the frame (27).

6. Panel securing clip (21) according to claim 5, wherein the long arm (30) comprises a protrusion (32) adapted to abut the frame (27).

7. A panel (11, 24) having a panel securing clip (1, 21) in accordance with any of claims 1 to 6 mounted thereon.

8. A glazing (11, 24), intended to be secured within an aperture in a vehicle body having a panel securing clip (1, 21) in accordance with any of claims 1 to 6 mounted thereon.

9. A method of securing a panel (11) within a frame (4), the panel (11) being equipped with at least one panel securing clip (1) in accordance with any of claims 1 to 6, the frame (4) having two opposing surfaces and being provided with holes (3), comprising:
aligning the at least one panel securing clip (1) with a hole (3) in the frame (4);
pushing the panel (11) into the frame (4) such that the securing portion (7) of the at least one panel securing clip (1) is inserted into the hole (3);
continuing to push the panel (11) into the frame (4) until the base portion (2) abuts a first surface of the frame (4);
moving the securing portion (7) until the locking means (12) engage and the securing portion (7) contacts the opposing surface of the frame (4), and the
panel (11) is secured.

10. A method of securing a panel (24) within a frame (27), the panel (24) being equipped with at least one panel securing clip (21) in accordance claim 5 or 6, the frame (27) having two opposing surfaces and being provided with holes (29), comprising:
aligning the at least one panel securing clip (21) with a hole (29) in the frame (27);
pushing the panel (24) into the frame (27) until the long arm (30) of the securing portion (28) contacts a first surface of the frame (27);
continuing to push the panel (24) into the frame (27) such that the short arm (31) of the securing portion (28) of the at least one panel securing clip (21) is inserted into the corresponding hole (29);
pushing the panel (24) further into the frame (27) until a lower surface of the long arm (30) of the securing portion (28) contacts the base portion (22), the protrusion (33) of the short arm (31) abuts the opposing surface of the frame (27) and the locking means (27) engage.

11. The method of claim 9 or 10, wherein the panel (11, 24) is a vehicle glazing and the frame (4, 27) surrounds an aperture in a vehicle body.
